# EUROPEAN PATENT APPLICATION

(11) **EP 1 775 133 A2**
(43) Date of publication of application: **18.04.2007**
(21) Application number: 06122273.3
(22) Date of filing: 13.10.2006
(51) Int. Cl.: B41J 2/21

(54) **Opacity control of unpainted pixels**

(30) Priority: 14.10.2005 US 726197 P
(71) Applicant: CADlink Technology Corporation, Ottawa, Ontario K1H 1E1 (CA)
(72) Inventor: Veck, Ronald, Kingsbury, London NW9 8EJ (GB); St-Pierre, Paul, Oxford Mills, Ontario K0G 1S0 (CA)
(74) Representative: Intes, Didier Gérard André

(57) **Abstract**

A method for obscuring the background region of an object by applying a default colorant to each pixel within the region that is not set to have a desired colorant applied to it, and a system for implementing such a method.

## Description

### FIELD OF INVENTION

The invention relates to printing methods and systems and, in particular, it relates to ensuring a background color on per object bases independent of the media color.

### BACKGROUND

In a printing system there is a number of colorants. At any location (pixel) any combination of the colorants can be laid down. The actual number of colorants that are applied depends on input artwork and dithering or half toning method to achieve the colors in the input artwork. For light colours it is common to have pixels with no colorants being applied.

The assumption that users are printing on white media is no longer valid. Many people are printing on colour stock or clear film. When printing light colours on colour stock, the colour of the stock will be visible through the clear pixels (unpainted pixels); when printing light colours on clear film, the viewer will be able to see through the clear pixels. In both cases, the output artwork will be affected by the color or lack of color of the media.

The current solution to this problem is to print the artwork in two phases. First lay down in the region where the desired image is to be applied (hereinafter referred to as "the region") a solid coat of the desired default color (primer or background colour). Then print the image on top of the primer.

This solution is not ideal in terms of outcome and/or efficiency. One issue with excess ink usage is that the image is applied on top of the primer. On some printing systems the inks-the primer ink and the image ink-mix, which causes the colour to change. In other printing systems, this method works; however, there will always be wastage of colorant. (The area of the image will have two layers of colorant superimposed.) Also, when printing on thin media, excess ink might cause the media to ruffle.

Further, it is noted that some printers would not be able to rewind and therefore would not have the option of putting down a primer first, followed by an image on top. It is also noted that if a white primer, for instance, is applied, it may be difficult to control dryness hence to control the colour of the top image as the white will tend to mix with the process and make colours look washed out. It is therefore important to select the pixel location at the time of screening in order to ensure better colour integrity which is not afforded by the prior art. A very precise way to place white pixels is therefore required.

A further drawback with the solutions of the prior art is that artwork painted on clear film will not be visible from both sides.

### SUMMARY OF THE INVENTION

The present invention provides a method and a system to create either a white default background or any other selected default color without the need to coat the whole region or section of the medium upon which the object or image is to be printed on under the object with the desired media colour. This is done by determining for each pixel within the region if there is colorant to be applied, and if not, to apply the default colorant. This could be achieved in more than one approach.

The present invention provides advantages over the techniques above discussed and will suggest themselves to those skilled in the art upon reading of the following.

### BRIEF DESCRIPTION OF THE DRAWINGS

The invention, its organization, construction and operation will be best understood by reference to the following detailed description taken into conjunction with the accompanying drawings, in which:
Figure 1 shows a sectional, exploded view without the default colorant applied to the clear pixels.
Figure 2 shows the areas of the circle of Figure 1 with the default colorant applied.

### DETAILED DESCRIPTION OF THE INVENTION

For purpose of clarity, a Raptor Image Processor [RIP] is a software that takes the computers graphics data and converts it into data for the printer. It converts 256 shades of RGB (red-green-blue) to the pixel depth required for the printer and typically CMYK (cyan-magenta-yellow-black) -and sometimes to additional channels such as orange, green, or light cyan and magenta.

### First approach:

In the RIP, a location in memory or on disk is set up to hold for each pixel which colorant(s) is/are to be applied.
All the pixels under the dark and light-colour objects are set to be painted with the default colorant-that is, the default colorant is turned on for each pixel in the region by default.
Then the object is painted. For each pixel set to have a CMYK colorant, the default colorant is turned off.

### Second approach:

In the RIP, a location in memory or on disk is set up to hold for each pixel which colorant(s) is/are to be applied.
The image is painted.
The region is painted with the default colour. Each pixel is examined to determine if the CMYK pixel is set, and if it is, the default colour would not be applied to that pixel.

### Third approach:

In the first approach, the pixels that are not set to have a CMYK colorant are painted with the default colorant, and then the pixels that are set to have a CMYK colorant are painted with the desired colorant. In the second approach, the pixels that are set to have a CMYK colorant are painted with the desired colorant, and then the pixels that are not set to have a CMYK colorant are painted with the default colorant.

A third approach exists where the pixels are painted with respect to a pixel-painting order. The order could be top-to-bottom, left-to-right, or it could be any other predetermined order. Each pixel is examined in turn, and painted with either a CMYK colorant or the default colorant, depending on the RIP.

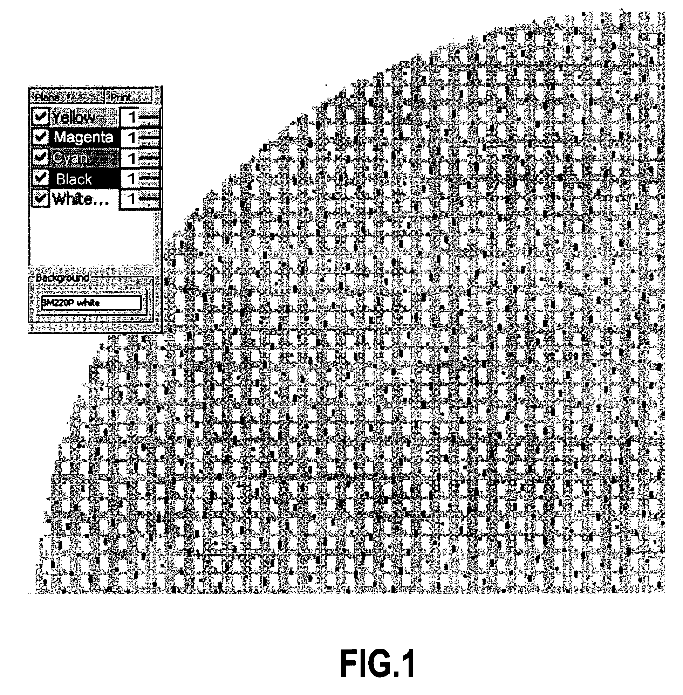

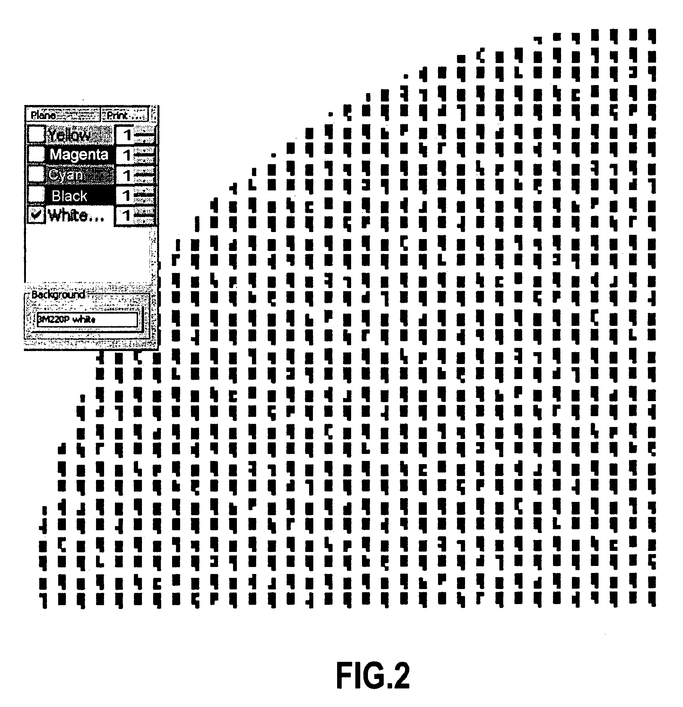

Once the object is painted using any of the three approaches, each pixel would have been set to have some amount of CMYK ink or white ink. Figure 1 shows a sectional, exploded view of a light-colored yellow and blue circle without the default colorant applied to the clear pixels. One can see pixels that have yellow and blue turned on (respectively light grey and black pixels on the image area of figure 1). Figure 2 shows-in black, for demonstrative purposes-the areas of the same circle of Figure 1 that would be painted with the default colorant.

The amount of default colorant being applied could be reduced: the default colorant could be set to a tint (e.g., 50% tint of white) instead of a solid colour (e.g., solid white). Then for the unpainted pixels, the default color will be a tint.

Although various preferred embodiments of the present invention have been described herein in detail, it will be appreciated by those skilled in the art, that variations may be made thereto without departing from the spirit of the invention or the scope of the appended claims.

## Claims

1. A method for obscuring the background region of an object **characterized in that** a default colorant is applied to each pixel within the region that is not set to have a desired colorant applied to it.

2. The method according to claim 1, wherein the pixels that are not set to have a CMYK colorant are painted with the default colorant, and then the pixels that are set to have a CMYK colorant are painted with the desired colorant.

3. The method according to claim 1, wherein the pixels that are set to have a CMYK colorant are painted with the desired colorant, and then the pixels that are not set to have a CMYK colorant are painted with the default colorant.

4. The method according to claim 1, wherein the pixels are painted with the desired colorant or the default colorant with respect to a predetermined order.

5. A system for implementing a method according to any of the claims 1 to 4.
